# EUROPEAN PATENT APPLICATION

(11) **EP 1 006 752 A2**
(43) Date of publication of application: **07.06.2000**
(21) Application number: 99123827.0
(22) Date of filing: 01.12.1999
(51) Int. Cl.: H04Q 11/04

(54) **Monitoring links in ATM networks**

(30) Priority: 04.12.1998 GB 9826675
(71) Applicant: Agilent Technologies Inc, Palo Alto, CA 94303-0870 (US)
(72) Inventor: Archibald, David Moir, Dalkeith, Midlothian, EH22 3HT (GB); Mottishaw, Peter John, South Queensferry, West Lothian EH30 9XU (GB)
(74) Representative: Coker, David Graeme

(57) **Abstract**

Data about operating characteristics in an ATM communications network are obtained by passive monitoring of a single link in each lowest level peer group of the network. This information is analysed to provide information about the operating conditions throughout the whole of that peer group, and can be collated with similar information about other peer groups to provide additional information about operation of the entire network.

## Description

### Technical Field

This invention relates to methods of monitoring links carrying signals in Asynchronous Transfer Mode (ATM) communications systems.

### Background Art

ATM networks are being actively deployed to provide high-speed, high-capacity, flexible communications for various kinds of media (audio, video, computer data etc.) in a manner which is cost-effective but also matches the different quality of service requirements of each media as regards propagation delay, reliability of delivery, etc.

However, difficulties are being encountered in installing, activating and managing these networks, in part because of a lack of visibility to the network operators of various operational characteristics of the networks.

It is an object of this invention to provide methods of monitoring ATM networks which at least partly alleviate these problems.

### Disclosure of Invention

According to one aspect of this invention there is provided a method of monitoring a link in an asynchronous transfer mode (ATM) network, comprising the steps of:
passively monitoring a signalling virtual channel connection (VCC) carrying routing control channel (RCC) packets;
identifying PNNI topology state packets (PTSPs) traversing said VCC;
extracting data from said PTSPs;
processing said data to yield information other than that directly used for routing traffic and indicative of the operational status of said link; and
providing an output in accordance with said information.

In a preferred embodiment of the invention, a VCC on a single link in a lowest level PNNI peer group is passively monitored, and said output provides information which relates to the whole of said peer group and which is derived from PTSPs traversing said VCC on said single link.

### Brief Description of Drawings

Methods and apparatus in accordance with this invention for monitoring an ATM network will now be described, by way of example, with reference to the accompanying drawings, in which:
- Figure 1: is a diagram of a routing hierarchy in an ATM network;
- Figure 2: shows the structure of information packets used to disseminate network topology information in an ATM network:
- Figure 3: is a block schematic diagram of a network monitor shown in Figure 1; and
- Figure 4: shows the format of an ATM cell.

### Best Mode for Carrying Out the Invention, & Industrial Applicability

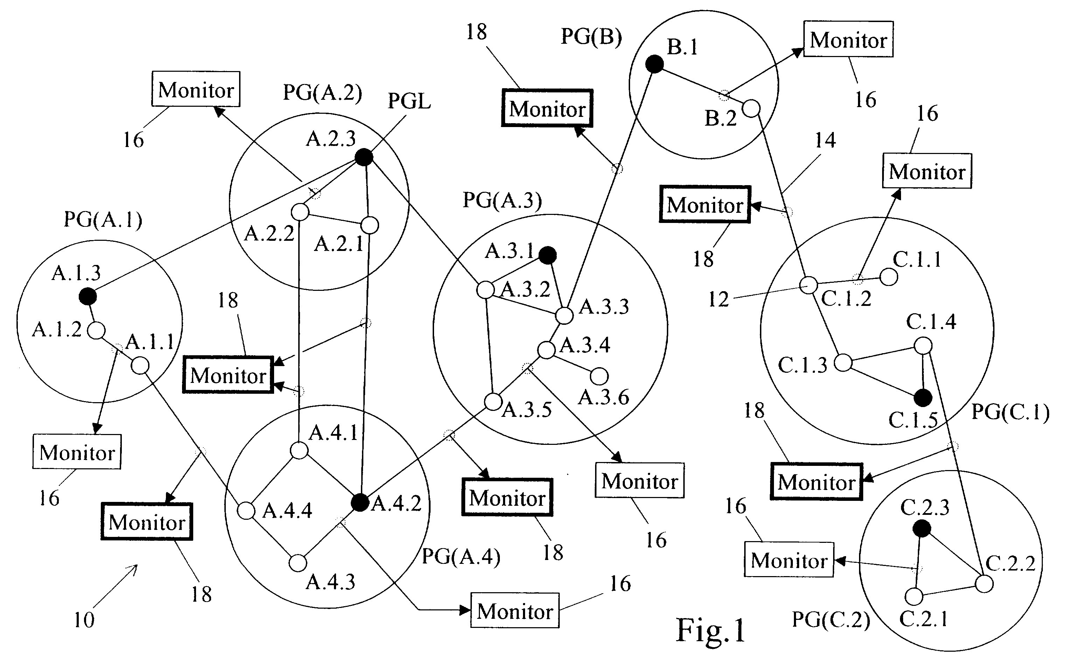

Referring to Figure 1, an ATM network 10 is shown organised in accordance with the hierarchy defined in the ATM Forum's Private Network-Network Interface (PNNI) Specification version 1.0 (af-pnni-0055.000, March 1996). In this network ATM switches, represented in Figure 1 as logical nodes 12, are interconnected by physical communications links (such as optical fibres) 14. The switching nodes route ATM cells containing 53 bytes or octets along the links in accordance with routing information held in each node, from source end-points (such as user terminals, not shown) to destination end-points (also not shown) identified in 5-octet headers forming part of the cells.

To avoid the need for every node to hold information about the presence and interconnection of every other node in the network (which in a large network would require prohibitively high network bandwidth, processing power and storage capacity), the PNNI specification provides a routing hierarchy for the nodes. A group of associated nodes (chosen for example on criteria such as geographical location) is connected together to define a "peer group" (PG), in which each node exchanges information about its presence and interconnections with other members of that group, so that all members of the peer group maintain an identical view of the group. In Figure 1 the peer groups are identified for example as PG(A.3), and individual nodes within a peer group are identified by appending an identifying digit to the peer group identifier; thus the node A.3.4 is a member of the peer group PG(A.3).

One, and only one, node in each peer group is designated as a "peer group leader" (PGL), which has the task of collecting information about the presence and interconnections of all the nodes in its peer group, and exchanging that information with PGLs in other peer groups to which its peer group is connected. In Figure 1 the PGL in each peer group is identified by a filled circle, for example the node A.3.1 in the peer group PG(A.3). At the next level up the peer-group hierarchy the peer group leaders themselves form a peer group; thus, the nodes A.1.3, A.2.3, A.3.1 and A.4.2 in Figure 1, in their capacities as peer group leaders, in turn form a higher-level peer group PG(A) comprising Logical Group Nodes A.1, A.2, A.3 and A.4 respectively. These higher-level group nodes are logical in the sense that they are an abstract unified representation of multiple nodes in the level below.

Each node in a peer group discovers information about its current interconnection state by exchanging special "Hello" information packets, having a format defined in the PNNI specification, with its immediately neighbouring nodes (i.e. those to which it has direct links). The Hello packets it receives in response yield information about the existence, identity, peer group membership and interconnections (including capacity information) of those neighbouring nodes. (These Hello packets and other packets discussed herein are logical data structures which are typically more than 48 octets (the data capacity of a single ATM cell) in size, and are therefore communicated by being split into 48-octet portions which are transferred in multiple respective cells and then assembled to reconstitute the complete packet at the destination node.)

A node gathers all the state information it possesses in PNNI Topology State Elements (PTSEs) which are disseminated throughout that node's peer group in a manner chosen to ensure that every member of the peer group reliably receives them. To this end multiple PTSEs are encapsulated within a PNNI Topology State Packet (PTSP) for transmission. Upon receiving such a packet, a node examines its constituent PTSEs and acknowledges them. The node also compares each PTSE with information it maintains in a topology database; if the PTSE is new, or contains more recent information than the copy currently in the topology database, the database is updated and that PTSE is communicated on to all the node's neighbours except the node from which the PTSE was received. PTSEs are also used to enable two nodes at either end of a link that is being initialized to synchronise their topology databases, and to enable a newly-initialized node to establish its topology database.

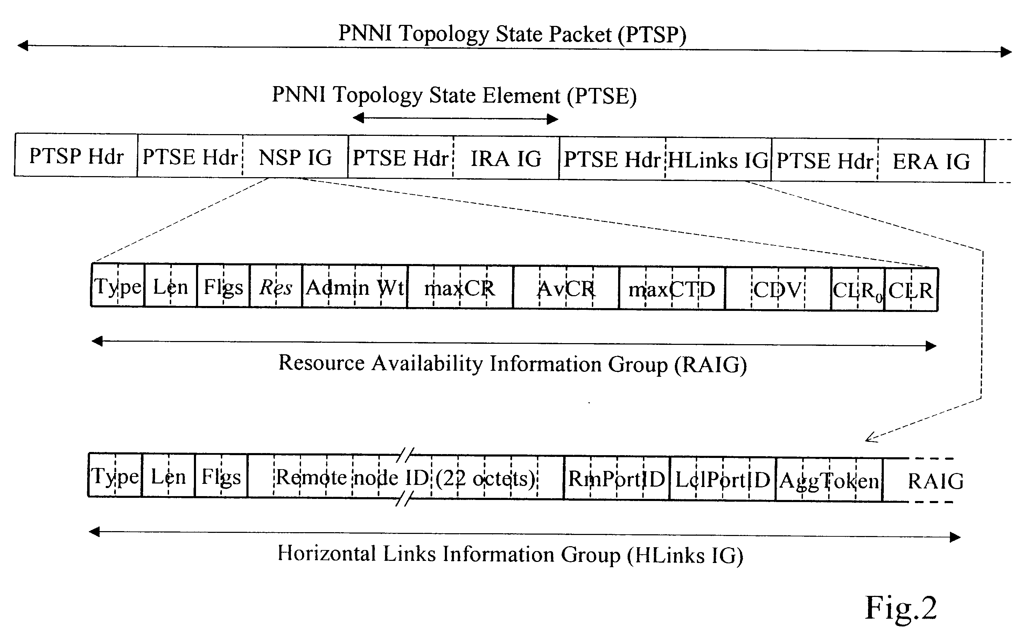

Referring to Figure 2, each PTSP includes a PTSP header (indicating that the packet is a PTSP, the identity - or ID - of the originating node and the identity of its peer group), and at least one PTSE. Each PTSE in turn includes a PTSE header (indicating that the associated block of data is a PTSE, together with information enabling the receiving nodes to identify updated PTSEs) followed by one of the information groups (IGs) below:
- Nodal State Parameters IG (NSP IG): this provides information about a node's input-output ports connected to the links 14;
- Nodal IG: this conveys general information about a node, such as its peer group ID, status within the peer group, and ATM address;
- Internal Reachable ATM Addresses IG (IRA IG): provides information about the ATM addresses of ATM end-points which are directly attached to a node involved in PNNI routing;
- Exterior Reachable ATM Addresses IG (ERA IG): provides information about the ATM addresses of ATM end-points which are reachable only through exterior networks not participating in PNNI routing;
- Horizontal Links IG (HLinks IG): provides information about links to other nodes within the same peer group;
- Uplinks IG: provides information about links to nodes which are outside the peer group of the node sending the PTSE.

A set of information known as a Resource Availability Information Group (RAIG) is included in the NSP IG, the IRA IG, the ERA IG, the HLinks IG and the Uplinks IG. As also shown in Figure 2, the RAIG includes the following information fields:
- Type (2 octets): has a value of 128 for information about resource availability in the outgoing direction from the node, and a value of 129 for information about resource availability in the incoming direction;
- Length (2 octets): the total length of the RAIG, including the Type and Length fields;
- RAIG flags (2 octets): five bits in this field indicate whether or not the information in a particular RAIG applies to each of the defined ATM service categories: Constant Bit Rate (CBR), Variable Bit Rate (VBR, real-time or non-real-time), Available Bit Rate (ABR) and Unspecified Bit Rate (UBR); a sixth bit controls how a Cell Loss Priority (CLP) bit in each ATM cell header is interpreted for generic connection admission control; this field is followed by two octets which are reserved for possible future use;
- Administrative Weight (Admin Wt, 4 octets): this enables a network operator to specify the relative desirability of using a link or node to which the RAIG applies;
- Maximum Cell Rate (maxCR, 4 octets): this specifies the maximum capacity, in cells per second, usable by connections in the relevant service categories;
- Available Cell Rate (AvCR, 4 octets): this specifies the effective available capacity, in cells per second, for the relevant service categories;
- Maximum Cell Transfer Delay (maxCTD, 4 octets): this is the sum, in microseconds, of:
   - the fixed delay that could be experienced by any delivered cell, including signal propagation times and switch processing delays; and
   - the peak-to-peak Cell Delay Variation (see following field), induced by buffering and cell scheduling, i.e. the difference between fixed delay (best case) and the value of CTD likely to be exceeded with probability no greater than a (worst case); (when an ATM connection is being negotiated a value for Cell Loss Ratio is agreed to place an upper bound on the probability α for that connection);
   maxCTD can thus be defined as the (1-α) quantile in the probability density function of CTD;
- Cell Delay Variation (CDV, 4 octets): the peak-to-peak CDV, in microseconds, i.e. the (1-α) quantile of CTD (that is, maxCTD), minus the fixed CTD;
- maximum Cell Loss Ratio objective for cells with cell loss priority (CLP) bit set to 0 (CLR₀): this is the maximum cell loss ratio (CLR) objective for cells which have their CLP bit set to 0, indicating they should have higher priority than cells with CLP= 1 (i.e. such cells may be discarded during periods of congestion to attain the CLR objective of cells with CLP=0); it is defined as the ratio of the number of cells with CLP=0 which do not successfully traverse the relevant link or node to the total number of such cells transmitted across it;
- maximum Cell Loss Ratio objective for cells with CLP bit set to 0 or 1 (CLR); this is the ratio of the number of cells which do not successfully traverse the relevant link or node to the total number of cells transmitted across it.

The HLinks IG includes fields which are useful in performing the present invention, in particular for identifying links. Referring again to Figure 2, this information group contains the following fields:
- Type (2 octets): has a value of 288;
- Length (2 octets): the total length of the HLinks IG, including the Type and Length fields;
- Flags (2 octets): the most significant bit of this field indicates whether or not the corresponding entity is capable of carrying virtual path connections;
- Remote Node ID (22 octets): the ID of the node remote from the node which originated the PTSE containing this information group, on the link to which the group relates; the combination of this ID and the remote port ID (see next field) enables the reverse direction of traffic on the link, from the remote node, to be unambiguously identified and distinguished from the traffic direction towards the remote node (see Local Port ID below);
- Remote Port ID (RmPortID, 4 octets): the ID of the port on the remote node to which the relevant link is attached;
- Local Port ID (LclPortID, 4 octets): the ID of the port on the node which originated this information group and to which the relevant link is attached; the combination of this and the originating node ID (in the PSTP header) unambiguously identifies the direction of traffic on the link towards the remote node;
- Aggregation Token (AggToken, 4 octets): used to control how outside links are aggregated at higher levels of the PNNI hierarchy;
- one or more outgoing RAIGs, for each service category or set of categories.

The RAIG information fields are used by the nodes to manage the network's resources, by negotiating quality of service parameters with end users when connections are being established, to take account of existing traffic loads and commitments, and by routing cells along appropriate paths. However, each node uses this information essentially to enable the network's available bandwidth to be used efficiently, and it therefore restricts its consideration of the fields in RAIGs to those relating to specific nodes and links with which it is inter-operating.

In this invention the information in the RAIG information fields of PTSPs actually traversing ATM links is used to deduce information about the state of a network overall. Furthermore the invention provides a capability for determining aggregate capacity and load in an entire lowest-level peer group (e.g. the peer group PG(A.3) in Figure 1) by monitoring just one single link within that peer group, and specifically by monitoring the Routing Control Channels (RCCs) designated for the exchange of PNNI packets. No additional processing load is imposed on any network element.

The available capacity of logical links between peer groups which are at the same level in the hierarchy (such as the peer groups PG(A.1), PG(A.2), PG(A.3) and PG(A.4)) can also be deduced, although with less resolution. This is accomplished by monitoring the PTSPs relating to these logical links (which may actually comprise the aggregation of more than one link between the relevant peer groups).

Thus, for monitoring at the lowest peer group level, a monitor 16 is passively connected to the link between the nodes A.4.2 and A.4.3 in the peer group PG(A.4), and similar monitors are passively connected each to one link within a respective one of the other peer groups. For monitoring at the next peer group level up, monitors 18 are connected to the logical links between peer groups, such that traffic over all logical links associated with one member of that peer group level is monitored. For example, and as shown in Figure 1, the monitors 18 are coupled to the logical links between:
- the peer group PG(C.1), and the peer groups PG(C.2) and PG(B), for monitoring in relation to the peer group PG(C);
- the peer group PG(B), and the peer groups PG(C.2) and PG(A.3), for monitoring in relation to the peer group PG(B) - one of these monitors is also used for monitoring in relation to the peer group PG(C) as just described;
- the peer group PG(A.4), and the peer groups PG(A.1), PG(A.2) and PG(A.3), for monitoring in relation to the peer group PG(A); the monitor 18 for the logical link between the peer groups PG(A.4) and PG(A.2) is actually coupled to two different physical links: that between the nodes A.2.1 and A.4.2, and that between the nodes A.2.2 and A.4.1.

The monitors 16 and 18 are shown with different-weight lines in Figure 1 to assist in distinguishing monitors for monitoring at different levels in the peer group hierarchy. However, the construction and operation of the monitors 16 and 18 themselves do not differ.

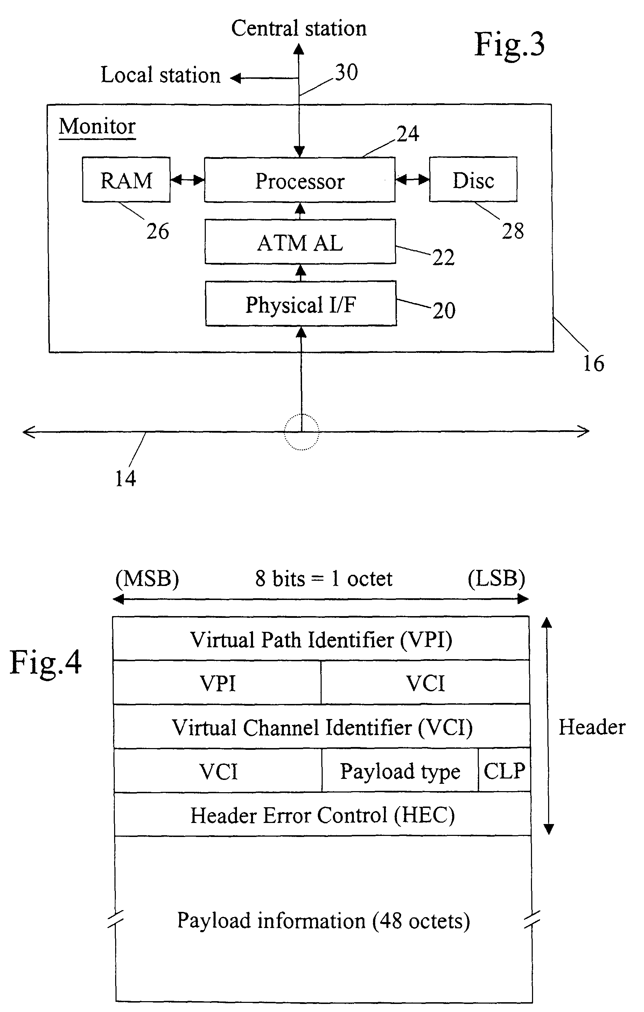

Figure 3 shows the organization of the monitors 16 (and 18) in block schematic form. Referring to Figure 3, each monitor 16 contains an interface 20 physically connected to the link 14 for passively monitoring the cells traversing that link. The monitoring is passive in the sense that the operation of the link is undisturbed by the presence of the monitor, which simply makes copies of some or all of the cells it detects; in the case of an optical link, for example, the interface 20 may comprise an optical power splitter. These copies are passed to an ATM Adaptation Layer (AAL) block 22, which performs error checking and cell selection in accordance with information in the cell headers, extracts payload data from the payload portion of selected cells, and reconstructs PTSPs from the payload data. These packets are passed to a processor 24 for analysis of the RAIGs they contain, in accordance with software program instructions stored in RAM 26 and disc store 28. The results of the analysis are forwarded by the processor 24 to a local station (such as a PC or computer workstation) over a communications link 30 (which may or may not form part of the ATM network) for review, numerically or graphically. This local station can present information for the entire peer group containing the monitored link, because the aggregated PTSPs traversing that link define the state of the complete peer group.

The analysis results can also be forwarded over the link 30 to a central station for similar review, and more particularly for collation with data from monitors for other peer groups to derive additional network management information and to enable the complete state of the network's capacity to be viewed for any peer group level. The local and/or the central station may also provide control signals to the monitors 16 and 18 over the link 30.

The AAL block 22 (which may comprise special-purpose hardware, or software instructions executed by the processor 24, or a combination of both) selects cells containing data for PTSPs by reference to values in the Virtual Path Identifier (VPI) and Virtual Channel Identifier (VCI) fields in the cells' headers (see Figure 4, which shows the format of cells internally of the network). More particularly the AAL block 22 seeks cells whose headers indicate that they are travelling over a specific Virtual Channel Connection (VCC) reserved for use as a PNNI RCC. For the monitors 16 this VCC is defined by the values VCI=18, and VPI=0 (in the case of a physical link) or VPI= *V* (in the case of a VCC within a virtual path connection having VPI= *V*). In the case of the monitors 18, looking at PNNI messages being exchanged between Logical Group Nodes over a dedicated switched virtual channel connection (SVCC) established for that purpose, the AAL block 22 seeks cells having a VPI and VCI assigned to that SVCC when it is set up.

The payloads in the cells selected by the AAL block 22 are extracted by the processor 24 and combined to reconstitute the PTSPs traversing the monitored links. Then the information fields of interest each PTSP, and particularly within their RAIG(s), are identified, and their contents are recorded for analysis.

Examples of the analyses which can be performed, and consequent actions which can be taken in accordance with the results of those analyses, are given below. In each case the described threshold comparisons and consequent actions can be undertaken in respect of service categories grouped together, and this may be required by any grouping applied by network nodes in assembling RAIGS; alternatively, to the extent permitted by such grouping, comparisons and actions can be undertaken for service categories specified individually, and identified by reference to the RAIG flags field.
- (*a*) extract the available cell rate (AvCR)) values for every link in a peer group, for each category of service; derive an aggregate value for the links, for example the sum and/or the mean of these values; trigger an alarm or store a record if the individual or aggregate available cell rates fall below respective predetermined thresholds (indicative for example that absolute data transport capacity is becoming exhausted);
- (*b*) extract the maximum cell rate (maxCR) values for every link in a peer group, for each category of service; derive an aggregate value for the links; using these data and the corresponding data for individual and aggregate available cell rates from item (a), derive the ratio *AvCR : maxCR* for each value in each service category; trigger an alarm or store a record if the value of any of these ratios falls below a respective predetermined threshold (indicative for example of imminent congestion);
- (*c*) using the data for individual and aggregate available cell rates and maximum cell rates from items (a) and (b), derive the individual and aggregate differences *maxCR - AvCR* for each service category; trigger an alarm or store a record if any of these differences falls below a respective predetermined threshold (indicative for example of fault causing non-use of a link);
- (*d*) extract the maximum cell transfer delay (maxCTD) values for every link in a peer group, for each category of service; derive an overall value for the links, for example one or more of the mean, median or maximum values; trigger an alarm or store a record if any of the individual or overall cell transfer delay values exceeds a respective predetermined threshold (indicative for example that a malfunction is causing excessive delay in transfer of cells through the network);
- (*e*) extract the cell delay variation (CDV) values for every link in a peer group, for each category of service; derive an overall value for the links, for example one or more of the mean, median or maximum values; trigger an alarm or store a record if any of the individual or overall cell delay variations exceeds a respective predetermined threshold (indicative for example that a malfunction is causing excessive variation in transfer delay of cells through the network);
- (*f*) extract the cell loss ratio values for cells with CLP=0 (CLR₀) for every link in a peer group, for each category of service; derive an overall value for the links, for example one or more of the mean, median or maximum values; trigger an alarm or store a record if any of the individual or overall CLRo cell loss ratios exceeds a respective predetermined threshold (indicative for example that congestion or a malfunction is causing excessive loss of higher priority cells in transit through the network);
- (*g*) extract the cell loss ratio values for all cells (CLR) for every link in a peer group, for each category of service; derive an overall value for the links, for example one or more of the mean, median or maximum values; trigger an alarm or store a record if any of these individual or overall cell loss ratio values exceeds a respective predetermined threshold (indicative for example that congestion or a malfunction is causing excessive loss of all cells in transit through the network);
- (*h*) the load on individual link channels in the lowest peer group level can be estimated using the difference between maximum cell rate (maxCR) and available cell rate (AvCR), summed across all the service categories using each link channel: the accuracy of this estimate will depend on whether a switch node actually indicates all of the link bandwidth in the AvCR field; furthermore the calculated load value indicates "committed" data rate (i.e. data rate already earmarked for existing connections) rather than actual data rate in cells currently propagating (because an end-user may not actually be using a connection which they have established); note that because horizontal links between Logical Group Nodes in higher level peer groups represent an aggregation of all physical links between the lower level peer groups represented by those Logical Group Nodes, this analysis is not applicable to links at levels above the lowest peer group level.

As already noted, the invention has the advantage that all the information about a lowest level peer group can be obtained by monitoring the RCCs on one link within the peer group. Another advantage is that changes in the network topology are automatically detected, as new information contained in relevant PTSPs; no regular polling, for example of network element management information bases (MIBs) need be undertaken.

It is envisaged that information about the network obtained by the monitors 16 and 18 can also be used for other management purposes. For example, the availability of resources in particular service categories can be compared with commitments made to customers in Service Level Agreements (SLAs); the results of this comparison can in turn be applied to billing calculation where billing amounts are dependent on the attainment of specified service levels.

## Claims

1. A method of monitoring a link in an asynchronous transfer mode (ATM) network. comprising the steps of:
passively monitoring a signalling virtual channel connection (VCC) carrying routing control channel (RCC) packets;
identifying PNNI topology state packets (PTSPs) traversing said VCC;
extracting data from said PTSPs;
processing said data to yield information other than that directly used for routing traffic and indicative of the operational status of said link; and
providing an output in accordance with said information.

2. The method of claim 1, wherein a VCC on a single link in a lowest level PNNI peer group is passively monitored, and said output provides information which relates to the whole of said peer group and which is derived from PTSPs traversing said VCC on said single link.

3. The method of claim 1 or claim 2, wherein said processing step involves comparing values contained in said data with predetermined thresholds, and said output indicates when said values attain a predetermined relationship to said thresholds.

4. The method of any one of the preceding claims, wherein said data extracted from said PTSPs relate to maximum cell rate and available cell rate, and said processing step comprises estimating cell load as a function of the maximum cell rate and the available cell rate.
